# EUROPEAN PATENT APPLICATION

(11) **EP 4 613 555 A1**
(43) Date of publication of application: **10.09.2025**
(21) Application number: 23885397.2
(22) Date of filing: 22.09.2023
(51) Int. Cl.: B60Q 1/14

(54) **CONTROL DEVICE FOR VEHICLE HEADLIGHT, CONTROL METHOD FOR VEHICLE HEADLIGHT, AND VEHICLE HEADLIGHT SYSTEM**

(30) Priority: 31.10.2022 JP 2022174214
(71) Applicant: Stanley Electric Co. Ltd., Tokyo 153-8636 (JP)
(72) Inventor: KAIZUMI, Yasuaki, Tokyo 153-8636 (JP); NISHIMURA, Shota, Tokyo 153-8636 (JP); SHOJI, Hideyasu, Tokyo 153-8636 (JP)
(74) Representative: Carstens, Dirk Wilhelm
(86) International application number: PCT/JP2023/034405
(87) International publication number: WO 2024/095633

(57) **Abstract**

To improve the lighting effect of a low beam while suppressing glare during ADB control.

A control apparatus for controlling the operation of a vehicle headlight, the control apparatus having a variable light distribution ON mode when a target object is present in front of the vehicle, where, when the variable light distribution ON mode is set, the control apparatus sets luminous intensity of a partial range within the irradiation range of a low beam to a first luminous intensity, the partial range being a portion from a first virtual reference line parallel to a vehicle width direction of the vehicle to a predetermined position below the first virtual reference line and which is a portion of the low beam in the vehicle width direction, where, when the variable light distribution ON mode is not set, the control apparatus sets luminous intensity of the partial range to a second luminous intensity which is higher than the first luminous intensity, and where the control apparatus generates a control signal for operating the vehicle lamp based on the dimming range setting result and the luminous intensity setting result for the specific range, and outputs the control signal to the vehicle headlight.

## Description

### TECHNICAL FIELD

The present disclosure relates to a control apparatus for a vehicle headlight, a control method for a vehicle headlight, and a vehicle headlight system.

### BACKGROUND ART

Variable light distribution control is known as a control technology for vehicle headlights, which selectively dims (or turns off) high beams in areas where preceding vehicles, oncoming vehicles, or pedestrians are present in order to prevent glare to these target objects. Such variable light distribution control is also called ADB (Adaptive Driving Beam) control. Japanese Unexamined Patent Application Publication No.2022-70295 (Patent Document 1) describes a vehicle lamp control device configured to include a headlamp equipped with a lamp unit that can change the light distribution pattern of the emitted light and its irradiation optical axis, and a control means that controls the lamp unit based on position information of a target object detected by a camera, where the control means includes a target object detection unit that detects a dark zone that occurs when the lamp unit irradiates the target object with light, and a lamp control unit that selectively or integrally controls the light distribution pattern and irradiation optical axis of the lamp unit based on the detected dark zone.

Here, the above-described prior art aims to prevent the occurrence of a dark zone in the area immediately behind the preceding vehicle when the distance between the own vehicle and the preceding vehicle becomes great and the preceding vehicle is present above the low beam cutoff line. However, since the brightness of a low beam does not generally become zero immediately above its cutoff line, for example, if one attempts to increase the lighting effect of the low beam, the luminous intensity increases not only below the cutoff line but also in a certain range above the cutoff line, which may actually cause glare when ADB control is performed on the preceding vehicle. On the other hand, it is not desirable to lower the luminous intensity of the entire low beam in order to avoid the possibility of such glare.

### PRIOR ART DOCUMENT

### PATENT DOCUMENT

[Patent Document 1] Japanese Unexamined Patent Application Publication No. 2022-70295

### SUMMARY OF THE INVENTION

### TECHNICAL PROBLEM

In a specific aspect, it is an object of the present disclosure to improve the lighting effect of a low beam while suppressing glare during ADB control.

### SOLUTION TO THE PROBLEM

(1) A control apparatus for a vehicle headlight according to one aspect of the present disclosure is (a) a control apparatus for controlling the operation of a vehicle headlight, the vehicle headlight mounted on a vehicle and capable of irradiating a low beam and a high beam with a variable light distribution pattern, (b) where the control apparatus has a variable light distribution ON mode that, when a target object is present based on a detection result of the target object in front of the vehicle, sets a dimming range according to the position of the target object within the high beam irradiation range, (c) where, when the variable light distribution ON mode is set, the control apparatus sets luminous intensity of a partial range within the irradiation range of a low beam to a first luminous intensity, the partial range being a portion from a first virtual reference line parallel to a vehicle width direction of the vehicle to a predetermined position below the first virtual reference line and which is a portion of the low beam in the vehicle width direction, where, when the variable light distribution ON mode is not set, the control apparatus sets luminous intensity of the partial range to a second luminous intensity which is higher than the first luminous intensity, and (d) where the control apparatus generates a control signal for operating the vehicle lamp based on the dimming range setting result and the luminous intensity setting result for the specific range, and outputs the control signal to the vehicle headlight.
(2) A control method for a vehicle headlight according to one aspect of the present disclosure is (a) a control method for controlling the operation of a vehicle headlight, the vehicle headlight mounted on a vehicle and capable of irradiating a low beam and a high beam with a variable light distribution pattern, (b)where a controller has a variable light distribution ON mode that, when a target object is present based on a detection result of the target object in front of the vehicle, sets a dimming range according to the position of the target object within the high beam irradiation range, (c) where, when the variable light distribution ON mode is set, the controller sets luminous intensity of a partial range within the irradiation range of a low beam to a first luminous intensity, the partial range being a portion from a first virtual reference line parallel to a vehicle width direction of the vehicle to a predetermined position below the first virtual reference line and which is a portion of the low beam in the vehicle width direction, where, when the variable light distribution ON mode is not set, the controller sets luminous intensity of the partial range to a second luminous intensity which is higher than the first luminous intensity, and (d) where the controller generates a control signal for operating the vehicle lamp based on the dimming range setting result and the luminous intensity setting result for the specific range, and outputs the control signal to the vehicle headlight.
(3) One embodiment of a vehicle headlight system includes: the control apparatus according to (1) described above; a headlight controlled by the control apparatus; and a sensor for detecting the target object.

According to the above configurations, it is possible to improve the lighting effect of the low beam while suppressing the possibility of glare during ADB control.

### BRIEF DESCRIPTION OF THE DRAWINGS

FIG. 1(A) is a block diagram showing the configuration of a vehicle headlight system according to one embodiment.
FIG. 1(B) is a schematic front view of a headlight.
FIG. 2 is a diagram showing an example of the configuration of a computer system.
FIG. 3(A) is a diagram for explaining a low beam, a high beam, and a partial range of the low beam.
FIG. 3(B) is a diagram showing a low beam and a partial range of the low beam extracted from FIG. 3(A), and FIG. 3(C) is a diagram showing a high beam extracted from FIG. 3(A).
FIG. 4(A) is a diagram for explaining a control method of light irradiation toward a partial range of the low beam.
FIG. 4(B) is a diagram for explaining a control method of light irradiation toward a partial range of the low beam in a modified embodiment.
FIG. 5(A) is a diagram showing the cross-sectional luminous intensity distribution of the irradiated light in the direction of line a-a shown in FIG. 3(B).
FIG. 5(B) is an enlarged view of the vicinity of a vertical angle of 0° shown in FIG. 5(A) (shown in a dotted line frame in the figure).
FIG. 6 is a diagram showing the cross-sectional luminous intensity distribution of irradiated light in a comparative example.
FIG. 7 is a diagram showing the cross-sectional luminous intensity distribution of irradiated light in a comparative example.
FIG. 8 is a flowchart showing an operation procedure of a controller in a vehicle headlight system.

### MODE FOR CARRYING OUT THE INVENTION

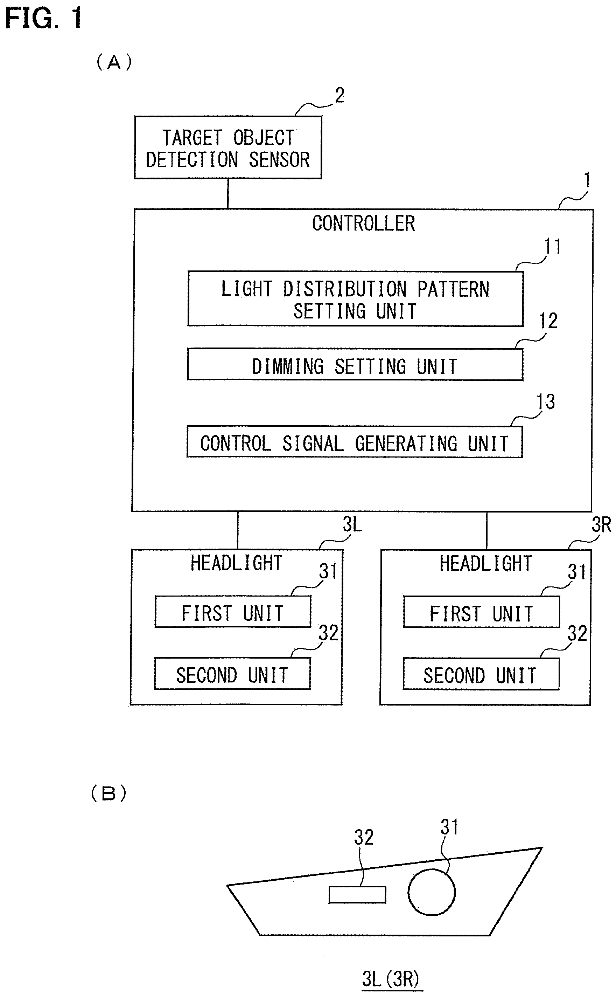

FIG. 1(A) is a block diagram showing the configuration of a vehicle headlight system according to one embodiment. The vehicle headlight system according to the present embodiment is configured to include a controller 1, a target object detection sensor 2, and a pair of headlights 3L, 3R. In the present embodiment, controller 1 corresponds to a "control apparatus," and the method of controlling the headlights 3L, 3R using this controller 1 corresponds to a "control method."

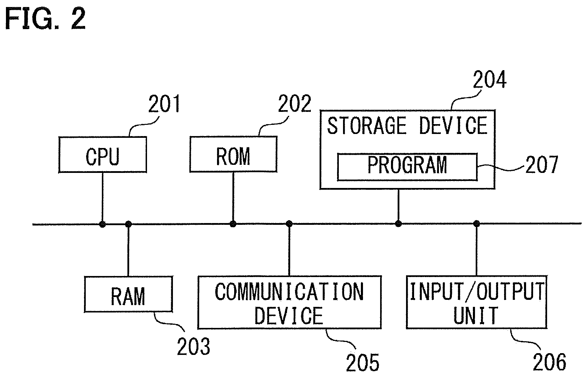

Controller 1 is connected to target object detection sensor 2 and each of the headlights 3L, 3R, and controls the light irradiation of each of the headlights 3L, 3R according to the detection results of the target object by the vehicle detection sensor 2. This controller 1 can be configured using a computer system (refer to FIG. 2 described below) equipped with, for example, a processor (CPU: Central Processing Unit), a storage device such as a ROM (Read Only Memory), a RAM (Random Access Memory), a flash memory, and an input/output interface. Controller 1 of the present embodiment is capable of performing a predetermined function by having a program stored in advance in the storage device (or ROM) being read out and executed by the processor.

Target object detection sensor 2 detects target objects such as preceding vehicles, oncoming vehicles, pedestrians, and bicycles, and provides information such as their position, size, and type to controller 1. Target object detection sensor 2 may be, for example, a sensor that detects target objects by taking a photo of the area in front of the vehicle with a camera and performing image analysis on the image data. Alternatively, LiDAR (Light Detection And Ranging) may be used, which detects target objects by irradiating the target object with light such as near-infrared light and detecting the reflected light with an optical sensor, or millimeter wave radar may be used, which detects target objects by irradiating the target object with radio waves at a frequency of tens to hundreds of GHz and detecting the reflected waves.

Headlights 3L, 3R are installed at predetermined positions on the left and right sides of the front of the vehicle, and operate based on control signals provided by controller 1 to irradiate light ahead of the vehicle. Each headlight 3L, 3R is equipped with a first unit 31 and a second unit 32. As shown in a schematic front view of headlight 3L in FIG. 1(B), first unit 31 and second unit 32 are provided separately and installed within a housing. Since headlight 3R is symmetrical to headlight 3L, a figure is omitted. Here, note that first unit 31 and second unit 32 may be configured as one unit.

First unit 31 forms a low beam, which is a light for irradiating forward region relatively close to the vehicle, and a high beam, which is a light for irradiating forward region relatively far from the vehicle. In the present embodiment, with regard to the irradiation of the high beam, the above-described variable light distribution control (ADB control) is performed. Specifically, for example, within the entire irradiation range of the high beam, the range where a preceding vehicle or an oncoming vehicle exists is set as a range where the light is dimmed, and the other range is set as a range where high beam is irradiated. Here, note that the concept of "dimming" in this embodiment includes setting the light intensity to 0, in addition to setting the light intensity relatively lower than that of a normal high beam. Here, by turning a switch on and off, this ADB control can be selected between a variable light distribution ON mode in which ADB control is performed and a variable light distribution OFF mode in which ADB control is not performed.

First unit 31 capable of emitting a high beam with a variable light distribution pattern as described above may be, for example, a unit having a plurality of light-emitting diodes (Light Emitting Diodes) arranged in two directions, and capable of individually controlling the on/off of each light-emitting diode. Further, first unit 31 may be a unit that combines a light source bulb with a reflector or a shielding plate, or the unit may be a unit that combines a liquid crystal element that can individually control the light transmission state of each pixel with a light source, or the unit may be a unit that can control the timing of turning on and off a semiconductor laser such as a laser diode and the scanning timing of a scanning element. Furthermore, a unit that combines a plurality of lamps that can each emit a different fixed light distribution may also be used.

Second unit 32 emits light to be superimposed on a partial range that is set within the irradiation range of the low beam emitted by first unit 31. The specific location of the partial range will be described later. Second unit 32 may be, for example, a unit having several light-emitting diodes that can be individually controlled to be turned on and off.

The functions realized by the above-described controller 1 executing a program will be explained using functional blocks. Controller 1 is configured to include a light distribution pattern setting unit 11, a dimming setting unit 12, and a control signal generating unit 13.

Light distribution pattern setting unit 11 variably sets the light distribution pattern within the entire irradiation range of the high beam based on the detection result of the target object by target object detection sensor 2, and outputs the setting content to control signal generating unit 13. The light distribution pattern includes an irradiation range and a dimming range. As described above, for example, a predetermined range including the positions of a preceding vehicle or an oncoming vehicle is set as the dimming range, and the other range is set as the irradiation range.

Dimming setting unit 12 sets the necessity and range of dimming for a partial range (region irradiated by second unit 32) within the above-described low beam irradiation range according to the dimming range included in the light distribution pattern set by light distribution pattern setting unit 11. Specifically, when the dimming range in the light distribution pattern and the above-described partial range of the low beam partially match in the width direction, dimming setting unit 12 sets the partial range to be dimmed, and sets the range that approximately matches the dimming range in the width direction as the range to be dimmed. Here, note that the term "approximately matches" is used because a perfect match is difficult, and for example, a match within an error range of ±10% with respect to the dimming range can be considered as "approximately matches".

Control signal generating unit 13 generates a control signal for realizing the irradiation pattern set by light distribution pattern setting unit 11, and outputs the control signal to first unit 31. Further, control signal generating unit 13 generates a control signal according to the necessity and range of dimming set by dimming setting unit 12, and outputs the control signal to second unit 32.

FIG. 2 is a diagram showing an example of the configuration of a computer system. The above-described controller 10 can be configured using, for example, the computer system as shown in the figure. A CPU (Central Processing Unit) 201 processes information by reading and executing a program 207 stored in a storage device 204. A ROM (Read Only Memory) 202 stores basic control programs and the like required for the operation of CPU 201. A RAM (Temporary Storage Memory) 203 temporarily stores data required for the information processing of CPU 201. A storage device 204 is a large-capacity storage device for storing data, and is comprised of a hard disk drive, solid state drive, or the like. A communication device 205 performs processing related to data communication with other external devices. An input/output unit 206 is an interface for connecting to external devices. The CPU 201 and the like are connected to each other via a bus so that they can communicate with each other.

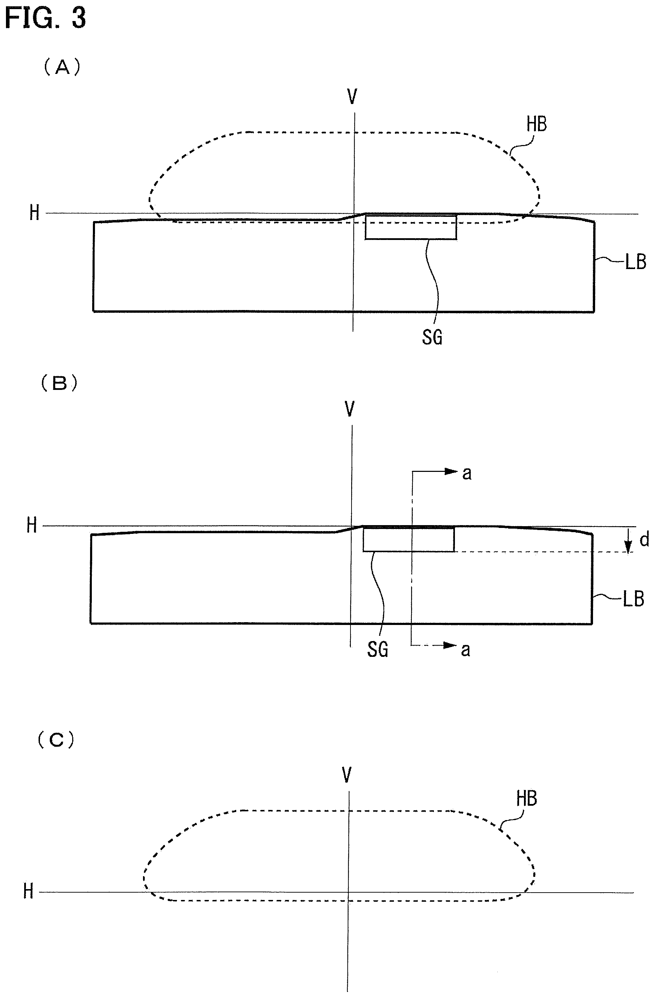

FIG. 3(A) is a diagram for explaining a low beam, a high beam, and a partial range of the low beam. FIG. 3(B) is a diagram showing the low beam and a partial range of the low beam extracted from FIG. 3(A), and FIG. 3 (C) is a diagram showing the high beam extracted from FIG. 3(A). Each diagram shows main irradiation range of the low beam, etc. on a virtual screen assumed in the vertical direction at a predetermined position (e.g., 25 m) in front of the vehicle. In the figures, line H which is a straight line extending horizontally, indicates a horizontal direction reference line (i.e., a first virtual reference line in the vehicle width direction), and line V which is a straight line extending vertically, indicates a vertical direction reference line (i.e., a second virtual reference line in the vehicle height direction). Here, in the present embodiment, the irradiation range of the low beam, etc. is assumed when traffic regulations stipulate so-called "right-hand traffic", but when traffic regulations stipulate so-called "left-hand traffic", the irradiation range is reversed.

The upper end of low beam LB on the right side of the V line in the figure is almost in contact with the H line, and the upper end on the left side of the V line in the figure is located almost in a straight line below the H line, and a portion between the upper end right side and upper end left side intersects diagonally with the V line, and as a whole, it is formed wide below the H line. Here, note that the range of low beam LB shown in the figure is the main irradiation range of the low beam. In reality, low beam LB is irradiated with a gradually decreasing luminous intensity outside the range shown in the figure.

A partial range SG in low beam LB is provided, among the left and right regions in the figure adjacent to each other separated by the V line, at least in the right side region of the figure, as a portion of a predetermined width from a position close to the V line to a position far from the V line. Further, partial range SG is also provided as a portion of a predetermined height "d" below the H line. The height "d", for example, is preferably within a range of 3° below the H line at an angle based on the position of the vehicle, and more preferably within a range of 1° to 2°. Here, partial range SG may also be provided in a similar manner on the left side region across the V line.

High beam HB is generally formed in a wide range above the H line and extends to the left and right of the V line. In detail, high beam HB is formed so that its lower end extends slightly below the H line, and this lower end side is formed so that it partially overlaps with the upper end side of low beam LB. Furthermore, high beam HB can be configured to have a variable dimming range at least in the width direction (direction parallel to the H line) within the entire irradiation range indicated by the dotted line in the figure. Here, the dimming range may be configured to be variable not only in the width direction but also in the vertical direction (direction parallel to the V line).

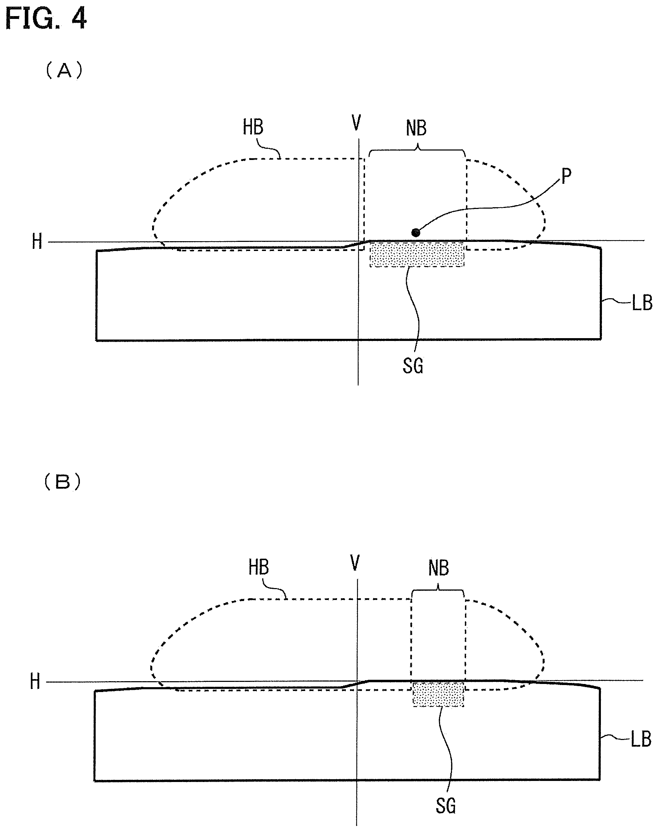

FIG. 4(A) is a diagram for explaining a control method of light irradiation toward the partial range of the low beam. In the present embodiment, high beam HB is irradiated by a light distribution pattern in which the dimming range is set by light distribution pattern setting unit 11 according to the position of a preceding vehicle or the like. As a result, dimming range NB is set within the possible irradiation range of high beam HB as shown in the figure. As described above, this dimming range NB is a range in which light is dimmed compared to the irradiation range of the otherwise high beam HB. At this time, when partial range SG overlaps with dimming range HB at least partially in the width direction, dimming setting unit 12 sets second unit 32 to dim the light irradiated to partial range SG.

Here, as shown in FIG. 4(B), it is also preferable to variably set the width of partial range SG according to the width of dimming range NB. On the other hand, the width and position of partial range SG may be fixed, and when partial range SG overlaps at least partially with dimming range NB in the width direction, the entire fixedly set partial range SG may be dimmed.

Low beam LB of the present embodiment has an overall luminous intensity set by combining the light irradiated by first unit 31 and the light irradiated to partial range SG by second unit 32, therefore when the light irradiated to partial range SG is dimmed, the luminous intensity in that range decreases. In other words, the luminous intensity of the light generated by low beam LB at position P in dimming range NB, which is slightly above the H line, increases or decreases according to the luminous intensity of the light irradiated to partial range SG. Position P in the present embodiment is assumed to be a position within 0.5° (for example, 0.15°) above the H line at an angle based on the position of the vehicle, and to one side of the V line (the right side in this example).

By dimming the light irradiated to partial range SG according to dimming range NB, the luminous intensity of low beam LB at position P is reduced, thereby suppressing the possibility of glare in the dimming range NB. On the other hand, when dimming range NB does not overlap with partial range SG, partial range SG is irradiated with light, so that sufficient light is irradiated as a low beam, thereby a reduction in forward visibility is prevented.

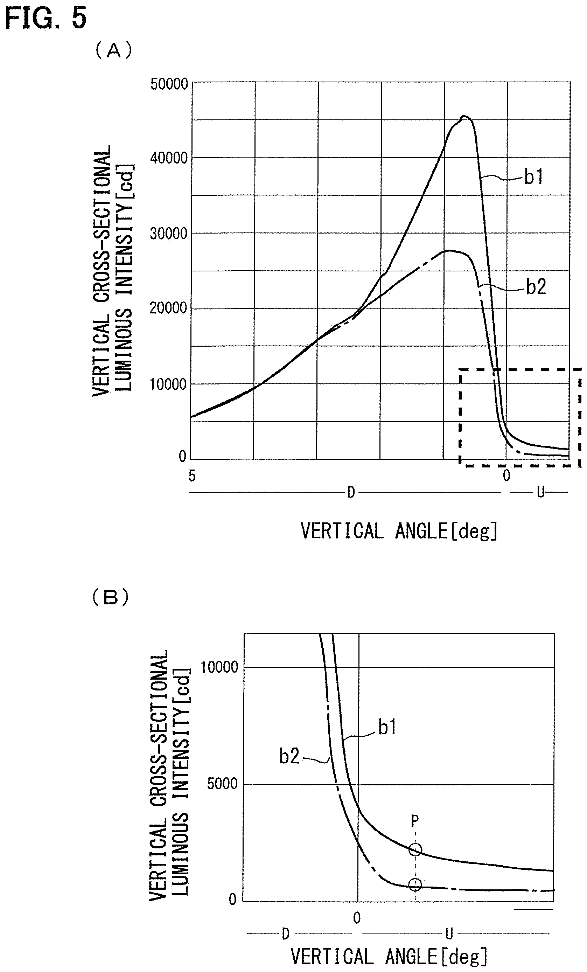

FIG. 5(A) is a diagram showing the cross-sectional luminous intensity distribution of the irradiated light in the direction of line a-a shown in FIG. 3(B). Further, FIG. 5(B) is an enlarged view of the vicinity of a vertical angle of 0° shown in FIG. 5(A) (shown in a dotted line frame in the figure). Here, note that line a-a passes through position P shown in FIG. 4(A).

The luminous intensity distribution curve b1 shown in each figure shows the luminous intensity distribution by low beam LB when light is irradiated to partial range SG. As shown in the figure, the maximum luminous intensity is approximately 45,000 [cd] at a vertical angle of approximately 0.7°. Further, as shown in the enlarged view, a relatively high luminous intensity is obtained even at a vertical angle slightly greater than 0°. That is, when partial range SG and dimming range NB do not overlap in the vertical direction, the amount of light necessary to ensure forward visibility can be obtained.

The luminous intensity distribution curve b2 shows the luminous intensity distribution by low beam LB when light is not irradiated to partial range SG. As shown in the figure, the maximum luminous intensity at a vertical angle of about 0.7° is about 27,500 [cd], but as shown in the enlarged view, the luminous intensity can be significantly reduced at a position slightly greater than the vertical angle of 0°. That is, when partial range SG and dimming range NB overlap in the vertical direction, the luminous intensity in the range greater than the vertical angle of 0°, that is, the position above the H line, can be reduced to prevent glare. In this case, when dimming range NB is set, it is possible to suppress the brightness to the level required for dimming control in ADB control.

As shown in the enlarged view of FIG. 5(B), for example, when position P is set at 0.15° above line H, it is preferable to set the luminous intensity distribution of the light irradiated to partial range SG and low beam LB so that the luminous intensity at position P is 1000 [cd] or less when light irradiation to partial range SG is not performed, and the luminous intensity at position P is greater than 1000 [cd] when light irradiation to partial range SG is performed. As a result, this makes it possible to better balance between preventing glare when dimming range NB is set to overlap with the partial range SG, and improving forward visibility when dimming range NB is not set.

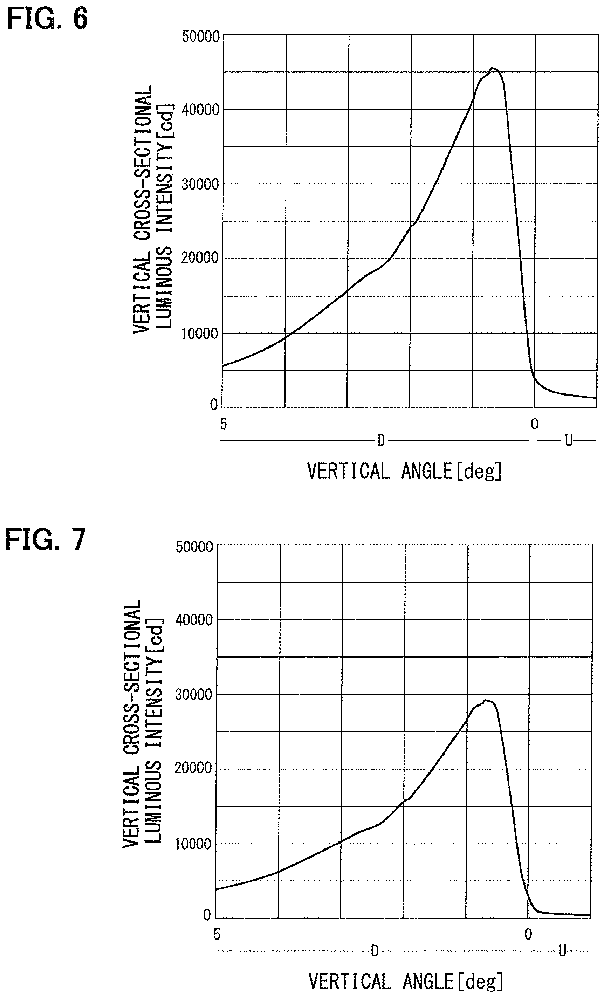

On the contrary, as in the comparative example shown in FIG. 6, when a conventional low beam has a luminous intensity distribution that prioritizes to ensure forward visibility, since the luminous intensity distribution is fixed, there is a possibility that glare will occur when dimming range NB is set. On the other hand, as in the comparative example shown in FIG. 7, when a conventional low beam has a luminous intensity distribution that prioritizes to suppress glare, since the luminous intensity distribution is fixed, there is a possibility that light distribution with only low beam will lead to a reduction in forward visibility.

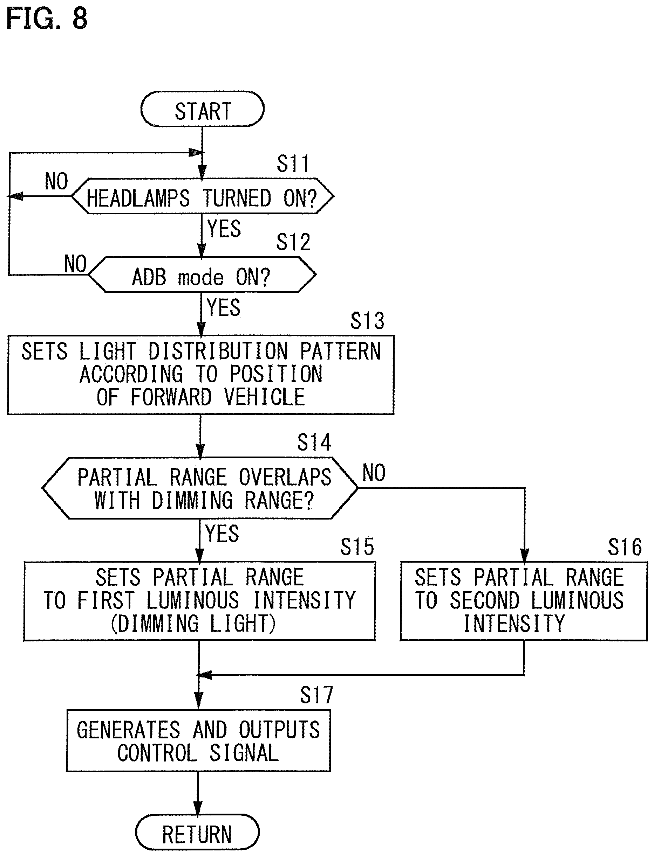

FIG. 8 is a flowchart showing an operation procedure of a controller in a vehicle headlight system. Here, note that, as long as no contradictions or inconsistencies occur in the results of the information processing, the order of processing may be changed or other processing may be added, and such embodiments are not excluded.

When a lamp switch (not shown) provided in the vehicle is operated to instruct the headlamps to be turned on (step S11; YES), and further, when performance mode of ADB control is operated to set to variable light distribution ON mode (step S12; YES), light distribution pattern setting unit 11 of controller 1 sets a light distribution pattern according to the position of a forward vehicle (a preceding vehicle, a oncoming vehicle) detected by target object detection sensor 2 (step S13).

Further, when dimming range NB included in the light distribution pattern set by light distribution pattern setting unit 11 overlaps with partial range SG (step S14; YES), dimming setting unit 12 sets partial range SG to a first luminous intensity (luminous intensity which corresponds to dimming light) (step S15).

On the other hand, when dimming range NB does not overlap with partial range SG (step S14; NO), the dimming setting unit sets the partial range SG to a second luminous intensity (normal non-dimming luminous intensity) (step S16) .

Control signal generating unit 13 generates a control signal according to the settings of light distribution pattern setting unit 11 and dimming setting unit 12, and outputs the signal to each headlight 3L, 3R (step S17). The headlights 3L, 3R, which are activated in response to the control signal, form a low beam LB and a high beam HB and irradiate them in front of the vehicle. Further, the brightness of partial range SG increases or decreases. Then, the process returns to step S11.

Here, when the lamp switch is not operated and no command has been given to turn on the headlamps (step S11; NO), the determination in step S11 is repeated. The same applies when the lamp switch is operated to turn on the headlamps, and then turned off. Further, when performance mode of ADB control is set to variable light distribution OFF mode (step S12; NO), ADB control is not performed and the process returns to step S11. In this case, high and low beams are simply formed by each headlamp 3L, 3R and irradiated forward of the vehicle.

According to the above embodiment, it is possible to improve the lighting effect of the low beam while suppressing the possibility of glare during ADB control.

Here, note that the present disclosure is not limited to the content of the above described embodiment, and various modifications can be made within the scope of the gist of the present disclosure. For example, in the above-described embodiment, dimming setting unit 12 sets partial range SG to the first luminous intensity when dimming range NB overlaps with at least a portion of partial range SG. Alternatively, by operating the switch for turning the ADB control on and off, when the variable light distribution is in ON mode, the partial range SG can be set to the first luminous intensity (dimmed light) by dimming setting unit 12 regardless of the positional relationship between dimming range NB and partial range SG, and when the variable light distribution is not in ON mode, partial range SG can be set to the second luminous intensity by dimming setting unit 12. According to such an embodiment, the same effect as above can be achieved without a control that relates dimming range NB to partial range SG**.**

The present disclosure has features as appended below.

### (Appendix 1)

A control apparatus for controlling the operation of a vehicle headlight, the vehicle headlight mounted on a vehicle and capable of irradiating a low beam and a high beam with a variable light distribution pattern,
where the control apparatus has a variable light distribution ON mode that, when a target object is present based on a detection result of the target object in front of the vehicle, sets a dimming range according to the position of the target object within the high beam irradiation range,
where, when the variable light distribution ON mode is set, the control apparatus sets luminous intensity of a partial range within the irradiation range of a low beam to a first luminous intensity, the partial range being a portion from a first virtual reference line parallel to a vehicle width direction of the vehicle to a predetermined position below the first virtual reference line and which is a portion of the low beam in the vehicle width direction,
where, when the variable light distribution ON mode is not set, the control apparatus sets luminous intensity of the partial range to a second luminous intensity which is higher than the first luminous intensity, and
where the control apparatus generates a control signal for operating the vehicle lamp based on the dimming range setting result and the luminous intensity setting result for the specific range, and outputs the control signal to the vehicle headlight.

### (Appendix 2)

The control apparatus for a vehicle headlight according to appendix 1,
where the partial range is set in one of two adjacent regions separated by a second virtual reference line that is assumed in front of the vehicle and parallel to the vehicle height direction.

### (Appendix 3)

The control apparatus for a vehicle headlight according to appendix 1 or 2,
where the partial range is set within 3° below the first virtual reference line at an angle based on the position of the vehicle.

### (Appendix 4)

The control apparatus for a vehicle headlight according to any one of appendices 1 to 3,
where the partial range is set within 2° below the first virtual reference line at an angle based on the position of the vehicle.

### (Appendix 5)

The control apparatus for a vehicle headlight according to any one of appendices 1 to 4,
where, when the dimming range is set, the luminous intensity of light resulting from the low beam at a predetermined position above the partial range and within 0.5° above the first virtual reference line at an angle based on the position of the vehicle, is 1000 candelas or less.

### (Appendix 6)

The control apparatus for a vehicle headlight according to appendix 5,
where, when the dimming range is not set, the luminous intensity of light resulting from the low beam at a predetermined position above the partial range and within 0.5° above the first virtual reference line at an angle based on the position of the vehicle, is greater than 1000 candelas.

### (Appendix 7)

The control apparatus for a vehicle headlight according to any one of appendices 1 to 6,
where the position of the partial range is set to a fixed position, and
where luminous intensity of the partial range is set to the first luminous intensity when the dimming range is set and the position of the dimming range and the partial ranges overlap in the direction along the first virtual reference line.

### (Appendix 8)

A control method for controlling the operation of a vehicle headlight, the vehicle headlight mounted on a vehicle and capable of irradiating a low beam and a high beam with a variable light distribution pattern,
where a controller has a variable light distribution ON mode that, when a target object is present based on a detection result of the target object in front of the vehicle, sets a dimming range according to the position of the target object within the high beam irradiation range,
where, when the variable light distribution ON mode is set, the controller sets luminous intensity of a partial range within the irradiation range of a low beam to a first luminous intensity, the partial range being a portion from a first virtual reference line parallel to a vehicle width direction of the vehicle to a predetermined position below the first virtual reference line and which is a portion of the low beam in the vehicle width direction,
where, when the variable light distribution ON mode is not set, the controller sets luminous intensity of the partial range to a second luminous intensity which is higher than the first luminous intensity, and
where the controller generates a control signal for operating the vehicle lamp based on the dimming range setting result and the luminous intensity setting result for the specific range, and outputs the control signal to the vehicle headlight.

### (Appendix 9)

A vehicle headlight system including:
the control apparatus according to any one of appendices 1 to 7;
a headlight controlled by the control apparatus; and
a sensor for detecting the target object.

### Reference Signs List

1: Controller
2: Target object detection sensor
3L, 3R: Headlight
11: Light distribution pattern setting unit
12: Dimming setting unit
13: Control signal generating unit
31: First unit
32: Second unit

## Claims

1. A control apparatus for controlling the operation of a vehicle headlight, the vehicle headlight mounted on a vehicle and capable of irradiating a low beam and a high beam with a variable light distribution pattern,
wherein the control apparatus has a variable light distribution ON mode that, when a target object is present based on a detection result of the target object in front of the vehicle, sets a dimming range according to the position of the target object within the high beam irradiation range,
wherein, when the variable light distribution ON mode is set, the control apparatus sets luminous intensity of a partial range within the irradiation range of a low beam to a first luminous intensity, the partial range being a portion from a first virtual reference line parallel to a vehicle width direction of the vehicle to a predetermined position below the first virtual reference line and which is a portion of the low beam in the vehicle width direction,
wherein, when the variable light distribution ON mode is not set, the control apparatus sets luminous intensity of the partial range to a second luminous intensity which is higher than the first luminous intensity, and
wherein the control apparatus generates a control signal for operating the vehicle lamp based on the dimming range setting result and the luminous intensity setting result for the specific range, and outputs the control signal to the vehicle headlight.

2. The control apparatus for a vehicle headlight according to claim 1,
wherein the partial range is set in one of two adjacent regions separated by a second virtual reference line that is assumed in front of the vehicle and parallel to the vehicle height direction.

3. The control apparatus for a vehicle headlight according to claim 1,
wherein the partial range is set within 3° below the first virtual reference line at an angle based on the position of the vehicle.

4. The control apparatus for a vehicle headlight according to claim 3,
wherein the partial range is set within 2° below the first virtual reference line at an angle based on the position of the vehicle.

5. The control apparatus for a vehicle headlight according to claim 1,
wherein, when the dimming range is set, the luminous intensity of light resulting from the low beam at a predetermined position above the partial range and within 0.5° above the first virtual reference line at an angle based on the position of the vehicle, is 1000 candelas or less.

6. The control apparatus for a vehicle headlight according to claim 5,
wherein, when the dimming range is not set, the luminous intensity of light resulting from the low beam at a predetermined position above the partial range and within 0.5° above the first virtual reference line at an angle based on the position of the vehicle, is greater than 1000 candelas.

7. A control method for controlling the operation of a vehicle headlight, the vehicle headlight mounted on a vehicle and capable of irradiating a low beam and a high beam with a variable light distribution pattern,
wherein a controller has a variable light distribution ON mode that, when a target object is present based on a detection result of the target object in front of the vehicle, sets a dimming range according to the position of the target object within the high beam irradiation range,
wherein, when the variable light distribution ON mode is set, the controller sets luminous intensity of a partial range within the irradiation range of a low beam to a first luminous intensity, the partial range being a portion from a first virtual reference line parallel to a vehicle width direction of the vehicle to a predetermined position below the first virtual reference line and which is a portion of the low beam in the vehicle width direction,
wherein, when the variable light distribution ON mode is not set, the controller sets luminous intensity of the partial range to a second luminous intensity which is higher than the first luminous intensity, and
wherein the controller generates a control signal for operating the vehicle lamp based on the dimming range setting result and the luminous intensity setting result for the specific range, and outputs the control signal to the vehicle headlight.

8. A vehicle headlight system comprising:
the control apparatus according to claim 1;
a headlight controlled by the control apparatus; and
a sensor for detecting the target object.
